# EUROPEAN PATENT APPLICATION

(11) **EP 3 104 271 A1**
(43) Date of publication of application: **14.12.2016**
(21) Application number: 15170990.4
(22) Date of filing: 08.06.2015
(51) Int. Cl.: G06F 9/44

(54) **RUNNING REMOTE JAVA APPLICATIONS THROUGH A LOCAL, PLUGIN-FREE WEB BROWSER**

(71) Applicant: Sandbaek, Hans-Henry, 80802 Munich (DE); Kirmaier, Florian, 85354 Freising (DE)
(72) Inventor: Sandbaek, Hans-Henry, 80802 Munich (DE); Kirmaier, Florian, 85354 Freising (DE)
(74) Representative: Qip Patentanwälte Dr. Kuehn & Partner mbB

(57) **Abstract**

A method for displaying a user interface (28) in a web browser (14) comprises:
serializing at least a part of a server side scene graph (34) into a data stream (36) with a serializing component (32) running in a Java virtual machine (24), wherein
the server side scene graph (34) models a spatial relationship of components (46) of the user interface (28) and wherein the server side scene graph (34) has been generated with an application (26) running in the virtual machine (24); sending the data stream (36) to a web browser (14) via an internet (16) data connection;
receiving the data stream (36) with a Javascript de-serializing component (38) running in the web browser (14); de-serializing the data stream (36) into a client side scene graph (40) with the de-serializing component (38); and rendering the client side scene graph (40) in the web browser (14).

## Description

### FIELD OF THE INVENTION

The invention relates to a method, a computer program and a computer-readable medium for displaying a user interface in a web browser. Furthermore, the invention relates to a system with a Java virtual machine and a web browser.

### BACKGROUND OF THE INVENTION

Usually, web applications use the following scheme for user interaction: A user interface is encoded into an HTML document in a web server, the HTML document is sent to a web browser, which renders and displays the user interface and waits then for user interaction. The results of the user interaction, i.e. user input, which in general is limited to clicking of buttons and links and inputting text is then sent by the web browser back to the web server, which further processes the user input and generates a further HTML document to be displayed by the web browser. Data to be displayed to the user may be provided by an application server, which also receives the newly input data, for example to be stored in a data base.

If the web application has a rich user interface, in the sense, that complicated user interaction should be provided, such as, for example, drag-and-drop, cursor changes, etc., which usually is provided by fat client applications, it may be possible to provide this behaviour by Javascript, a scripting language that may be directly encoded into the HTML document. However, in this case, usually the user interface of the application has to be programmed in different languages, one for the client side and one for the server side.

For applications with richer user interfaces, also applications based on so-called web browser plug-ins may be used. Examples for such plug-ins are Flash™, Java™ applets, or Microsoft Silverligh™. These plug-ins provide a scripting language or may execute code in a virtual machine such that a direct interaction with the application server is possible. However, due to security reasons, the needed administration efforts, version control, etc., plug-ins may not be allowed to be executed in the web browser.

### DESCRIPTION OF THE INVENTION

It is an objective of the invention to overcome the above mentioned problems. It may be a further objective of the invention to provide a framework, in which secure and simple to develop applications with rich user interfaces may be developed. It may be a further objective of the invention to provide a framework, in which an application, only having business logic on the server side, can have a rich user interface, that is displayed in a web browser without the use of a plug-in.

These objectives are achieved by the subject-matter of the independent claims. Further exemplary embodiments are evident from the dependent claims and the following description.

A first aspect of the invention relates to a method for displaying a user interface in a web browser. A user interface in a web browser may be or may comprise the graphical components, which are displayed in the window of the web browser that, on the one hand, are used for displaying information to a user (such as text, graphics and images) and, on the other hand, are used for receiving user inputs (such as text input fields, buttons, toggle boxes, etc.). A web browser may be software running on a computer that is adapted to loading, processing and displaying HTML documents. HTML documents, in particular, complying with the HTML standard, may be files that are provided by a web server and that may be loaded via an internet connection into the web browser.

According to an embodiment of the invention, the method comprises: serializing at least a part of a server side scene graph into a data stream with a serializing component running in a Java virtual machine, wherein the scene graph models a spatial relationship of components of the user interface and wherein the server side scene graph has been generated with an application running in the virtual machine; sending the data stream to a web browser via an internet data connection; receiving the data stream with a Javascript de-serializing component running in the web browser; de-serializing the data stream into a client side scene graph with the de-serializing component; and rendering the client side scene graph in the web browser with the de-serializing component.

For example, an application with business logic running in the Java virtual machine may generate and alter the server side scene graph. The server side scene graph may be manipulated via the application but not displayed at the server side, i.e. on the server. Usually, the application may interface with the server side scene graph via a GUI framework, which is adapted for creating, storing and/or manipulating the server side scene graph.

It has to be noted that the application may only interface with the scene graph and does not see that the data encoded in the scene graph is sent via internet to a remote client. For example, the application may be a desktop application, which user interface is transported by the serializing component and the de-serializing component to the web browser. However, the application also may be explicitly designed to be run on a server and/or may be executed in an application server.

The server side scene graph (as well as the client side scene graph) may be an object oriented structure, which comprises data fields, in which information of components of the user interface is stored. One data field may store the type of the component, such as text box, rectangle, button, etc. Other data fields also may comprise spatial data, such as a relative position to another component, an absolute position, width, height, etc. Furthermore, such data fields may comprise content information such as text to be displayed, colour, an image, etc.

Serializing, sending and de-serializing of the server side scene graph may then mean to encode data fields of the objects in the scene graph into a serial data stream, which is an object, for example provided by the Java language, sending the data of this object via the internet to the web browser, and composing a structure at the client side analogously to the server side scene graph with Javascript. This client side structure is then called client side scene graph. The client side scene graph may be composed by Javascript code running in the web browser, which may have been loaded from a web server, for example, the same web server, which has also provided the HTML page, which has triggered the display of the scene graph.

This client side scene graph may then be rendered in the web browser. In such a way, the user interface of application may be rendered in a web browser without the use of a plug-in in the web browser. The rendering may be completely virtual to the application. An application programmer implementing the business logic only may have to write a Java program, which then interacts with the GUI framework composing the server side scene graph. The serializing component and the de-serializing component may be seen as a virtualizing framework for displaying the server side scene graph directly in the browser.

The web browser may run in a client or client device, which may be a PC, a smartphone or an embedded device. The Java virtual machine may run in a server or server dive, which for, example, may be a server computer. The web browser and the Java virtual machine may run in the same or in different hardware.

It has to be noted that the server may be a server computer with dedicated hardware or may be a virtual device, for example running in a cloud computing facility. Also the client may be a client computer with dedicated hardware or may be a virtual device. It may be possible that the server and the client are running in the same hardware. It also may be possible that the client and the server are spatial remote form each other and are provided by different hardware.

According to an embodiment of the invention, the server side scene graph is created with a Java graphical user interface (GUI) framework, such as JavaFX. For example, JavaFX is a framework that composes, generates and updates a scene graph that is stored in the virtual machine running the application and JavaFX. This scene graph may be used as server side scene graph. It has to be noted that JavaFX may be executed as an applet in the web browser, however, in the present disclosure, it is proposed to execute Java only in the server. The de-serializing component in the web browser is completely based on Javascript.

The application running in the Java virtual machine on the server may interface with the GUI framework, in particular with JavaFX, to create the server side scene graph. The serializing component (also running in the virtual machine) monitors the scene graph and sends its data to the client.

According to an embodiment of the invention, the server side scene graph and/or the client side scene graph comprises a tree structure with nodes, each node representing a component of the user interface and its spatial relationship to a parent component. In general, a scene graph may be a data structure storing data fields relating to the display of GUI components. In the case of a tree structure, the server side/and or client side scene graph may comprise objects that are nodes of the tree structure. Different object types (for example derived from a node object) may encode different GUI components. The basic data fields of a node may be its width, height and/or relative position to a parent node/parent GUI component.

According to an embodiment of the invention, the data stream is sent from the serializing component to the de-serializing component via a WebSocket protocol. For example, when the de-serializing component starts to run in the web browser, it may request a WebSocket connection from the serializing component already running in the server. The serializing component may instantiate an application with business logic, may wait for the application to generate the server side scene graph and may then serialize and send the scene graph via the WebSocket connection to the de-serializing component.

According to an embodiment of the invention, the de-serializing component generates the client side scene graph with Javascript objects. It may be possible that de-serializing component reconstructs the scene graph on the client side directly inside Javascript. Then, the user interface may be rendered by the deserializing component by rendering components of the user interface into an HTML canvas object based on the client side scene graph.

According to an embodiment of the invention, the de-serializing component generates the client side scene graph inside a document object model (DOM) of an HTML scalable vector graphics (svg) object. It also is possible that the deserializing component uses the DOM already present in the web browser to generate the client side scene graph. For example, the svg object specified in HTML provides a tree structure with graphical objects that may be used as client side scene graph. When the DOM of the svg object is established, it is rendered autonomously by the web browser.

According to an embodiment of the invention, the serializing component detects changes in the server side scene graph caused by the application and serializes the changes into the data stream and the de-serializing component de-serializes the changes and updates the client side scene graph based on the changes. It may be possible that (after the scene graph has been sent for the first time completely) only changes to the scene graph are sent from the server to the client. The serializing component may monitor all or specific data fields in the server side scene graph (for example by binding to these data fields by utilising call-back functions or overriding setter properties, etc.). When a change is detected, this change is serialized into the data stream, and de-serialized at the client side. There, the client side scene graph is updated. For example, the DOM of a svg object may be changed accordingly, which automatically will trigger the browser to render the user interface in the modified way.

According to an embodiment of the invention, the method further comprises: loading and displaying an HTML document in the web browser, the HTML document provided by a web server; and loading the de-serializing component in the web browser, the de-serializing component provided by the web server. In general, the application (in particular a client specific instance of the application) may be started by calling a specific HTML page with the web browser. The HTML document may comprise a link to the de-serializing component (such as a <script>-tag) and the web browser may load the de-serializing component (for example in the form of a Javascript file) and may execute it. The de-serializing component may then establish a connection with the server (for example via WebSocket), which instantiate the application and returns the data stream with the serialized scene graph.

According to an embodiment of the invention, the de-serializing component is encoded in a Javascript file stored in the web server and/or the Javascript file is referenced in the HTML document. In such a way, before the HTML document is loaded into the web browser, the serializing component and the de-serializing component may be only present on the server side. Every web browser may be able to render the user interface of the application without the need for further native software and/or plug-ins on the client. Usually, security considerations allow it to execute Javascript in the web browser and the user may interact with the server side application.

According to an embodiment of the invention, the method further comprises: detecting user input by the de-serializing component and sending the user input via the internet connection to the serializing component. It also may be possible that not only the user interface is displayed in the web browser, but also that user input from a user (such as mouse clicks, button clicks, key presses, etc.) is sent back to the application. This also may be performed completely virtual for the application with business logic on the server. The user input also may be serialized and/or sent via WebSocket to the serializing component. The serializing component then may provide this user input to the application via the server side scene graph, for example by changing data fields in the server side scene graph.

According to an embodiment of the invention, the method further comprises: applying the user input to the scene graph by the serializing component such that a user event, registered in the scene graph for the user input, is executed. The application with business logic may register specific user input events in the server side scene graph. When user input is received, the serializing component may call the respective user event and the application may process the user input without further knowledge, where the user input has been generated.

When the scene graph has a tree structure with objects relating to GUI components providing nodes of the tree structure, these objects in the scene graph may have events that may interact with the application implementing the business logic. An event may be a data field storing a function that is called, when the event is to be processed.

A further aspect of the invention relates to a computer program comprising a Java serializing component adapted to be executed by a Java virtual machine and a Javascript de-serializing component adapted to be executed by a web browser. This distributed computer program may be run on a processor of a client, which executes the web browser, which furthermore executes the Javascript code of the de-serializing component and on a processor of a server, which executes a Java virtual machine, which furthermore executes byte code of the serializing component.

When being executed in a Java virtual machine, the serializing component is adapted for serializing at least a part of a server side scene graph into a data stream and sending the data stream to the de-serializing component via an internet data connection. The serializing component may be based on a file, package or data stream with Java source code and/or Java byte code. Also the application with business logic may be provided in such a form. It has to be noted that the serializing component may be based on another language that may be compiled to Java byte code, such as SCALA.

When being executed in the web browser, the de-serializing component is adapted for receiving the data stream, de-serializing the data stream into a client side scene graph and rendering the client side scene graph in the web browser. The de-serializing component may be based on a Javascript file and/or content of Javascript tags in an HTML document. The de-serializing and rendering may be performed in one step, when the client side scene graph is part of the DOM of an HTML document (for example of a svg object). In this case, the web browser renders the scene graph automatically.

A further aspect of the invention relates to a computer-readable medium, in which such a computer program is stored. For example, the computer-readable medium may store files with Java source code and/or Java byte code of the serializing component and/or may store files with Javascript code of the de-serializing component.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a system comprising a server with a Java virtual machine, the Java virtual machine containing a Java serializing component and a server with a web server, the web server providing a Javascript de-serializing component to be loaded by a web browser. The system may be a distributed system, where the Java virtual machine and the web server are provided on different hardware at different locations. However, it also may be possible that the web server and the virtual machine are running on the same hardware and/or the same (virtual device).

The web server is adapted for providing the Javascript de-serializing component to the web browser, which then may load the Javascript de-serializing component together with a web page, in which the user interface is embedded. The Java virtual machine, in which the Java serializing component is running may provide the serialized server side scene graph to the de-serializing component via the Internet. It furthermore may receive user input from the de-serializing component and/or may forward it to an application, which generates and alters the server side scene graph.

It has to be understood that features of the method as described in the above and in the following may be features of the computer program, computer-readable medium and the system as described in the above and in the following, as well as vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a system according to an embodiment of the invention.
Fig. 2 schematically shows a display window of a web browser, which may be used by a method according to an embodiment of the invention.
Fig. 3 schematically shows scene graphs, which may be used by a method according to an embodiment of the invention.
Fig. 4 schematically shows a sequence diagram illustrating a method according to an embodiment of the invention,

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

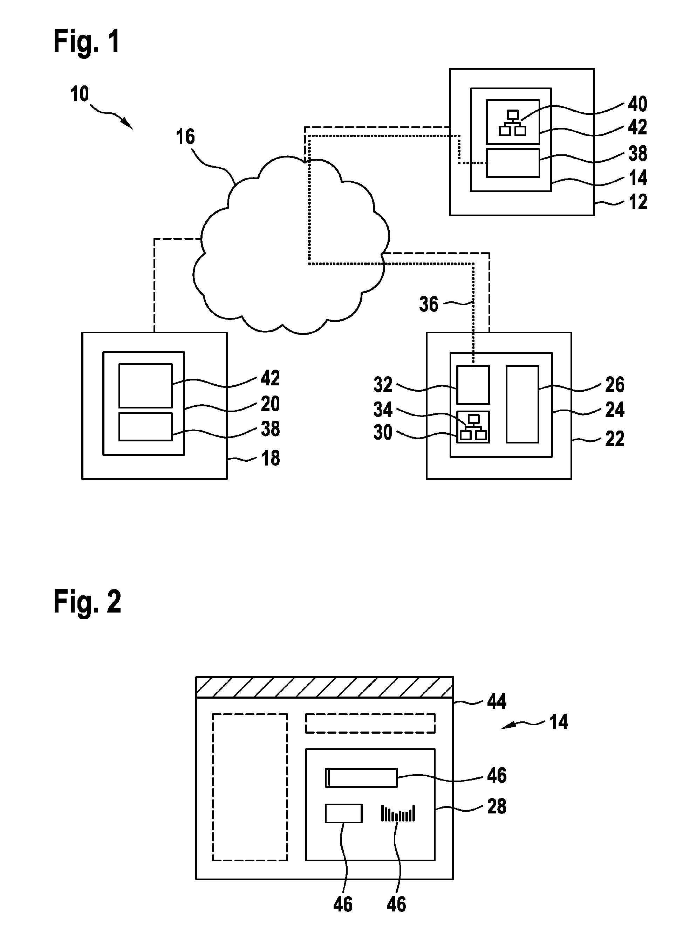

Fig. 1 shows a system 10 comprising a client 12 with a web browser 14 (such as Firefox™, Internet Explorer™, Chrome™) adapted for processing HTML pages. The client 12, for example, may be a PC, a virtual device, an embedded device or a Smartphone, which is connected to the Internet 16, from which the web browser 14 may load HTML pages and display them.

The system 10 furthermore comprises a server 18 with a web server 20 (such as apache tomcat™) and a further server 22, in which a Java virtual machine 24 is running. The server 18 and the further server 22 may be implemented in separate hardware or may be virtual machines in one or more a cloud computing facilities. It also may be possible that the web server 20 and the virtual machine 24 are running in the same hardware and/or the same (virtual) device. Also the servers 18, 24 are interconnected with the Internet 16.

In the virtual machine 24, a Java application 26 with business logic is running. The application 24 has a (graphical) user interface 28 (see Fig. 2) that will be displayed in the web browser 14 as will be explained in detail in the following. Furthermore, user input relating to the user interface 28 input by a user into the web browser 14 may be provided to the application 26.

In the Java virtual machine 24, besides the application 26, a GUI framework 30 and a serializing component 32 are provided. The application 26 generates its user interface 28 with the GUI framework 30, for example by calling functions/methods of the GUI framework 30. Furthermore, user input will be provided by the GUI framework 30 to application, for example by overwritten properties and/or call back functions. The display of the user interface 28 and/or the user input at the (properly) remote client 12 may be completely transparent to the application 26. The GUI framework 30 that may be a Java package generates a (server side) scene graph 34 from the input of the application 26. For example, the GUI framework 30 may be JavaFX™, which generates a scene graph 30 to store the properties of the user interface 28, such as spatial relationships, type of components, colours, texts, etc.

The serializing component 32 monitors the scene graph 34 and tracks changes in the scene graph 34 that for example are generated by the application 26, when executing business logic. For example, the application 26 may alter a text or may change the state of a button from activated to deactivated. It has to be understood that also the addition or movement of components as well as the generation of a completely new scene graph may be seen as changes of the scene graph 34. For example, the serializing component 32 may override properties and/or may replace call back functions/method in the GUI framework 30 to monitor such changes.

When a change in the scene graph 34 is detected, the serializing component 32 serializes the changes into a data stream 36, which, for example, may be established via the Internet 16 with the WebSocket protocol. The changes may be serialized in the form of specific data fields of the parts of the scene graph, which have been affected by the changes. Alternatively or additionally, the serializing component 32 may serialize the complete scene graph 34 into the data stream 36.

The application 24, the GUI framework 30 and/or the serializing component 32 may be provided in the form of Java files, a Java library and/or a Java package. The application 24, the GUI framework 30 and/or the serializing component 32 may be provided in the form of Java byte code. It has to be understood that this byte code also may be based on another programming language as Java, such as Scala, which also may be compiled into Java byte code.

It also may be possible that the application 24 (as well as the GUI framework 30 and/or the serializing component 32) are running in a Java based application server, such as Jboss™, Play!™ or Akka™.

A de-serializing component 38 in the web browser 14 receives the data stream 36 encoding changes, parts or the complete scene graph 34. The de-serializing component 38 is completely based on Javascript and does not need a plug-in and/or native program code to be executed in the web browser 14.

The de-serializing component 38 de-serializes the data stream 38 into a further (client side) scene graph 40. For example, the de-serializing component 38 may implement the scene graph 40 with Javascript objects and/or may use the DOM of an HTML page 42 in the web browser 14.

After that, the scene graph 40 is rendered in the web browser 14. For example, the de-serializing component 38 may render the components of the scene graph 40 into a canvas object of the DOM or the scene graph 40 may have been built in a DOM of a svg (scalable vector graphics) object. In the latter case, the web browser 14 then autonomously renders the user interface. A canvas object may be characterized by a <canvas>-tag in the HTML document. Similarly, a svg object may be characterized by a <svg>-tag.

As already said, the de-serializing component 38 is based on Javascript, a scripting language executed by the web browser 14. For example, the de-serializing component 38 may comprise Javascript code embedded into the HTML page 42 and/or may comprise Javascript code loaded from a Javascript file.

For example, the HTML document 42 may have been loaded from a resource of the web server 20, via the HTTP protocol. Also a Javascript file with Javascript code may have been loaded by the web browser from the web server 20 in this way. For example, the HTML document 42 may comprise a <script>-tag, which encompasses Javascript code of the de-serializing component 38 and/or references such Javascript code.

Fig. 2 shows a display window 44 of the web browser 14. In the display window 44, the user interface 28 of the application 26 is displayed inside the displayed HTML document 42. The user interface 28 comprises several components 46, such as text boxes, input boxes, buttons, images, etc. It may be possible that the user interface 28 is embedded into the displayed HTML document 42, which, for example, may display further components not belonging to the user interface 28.

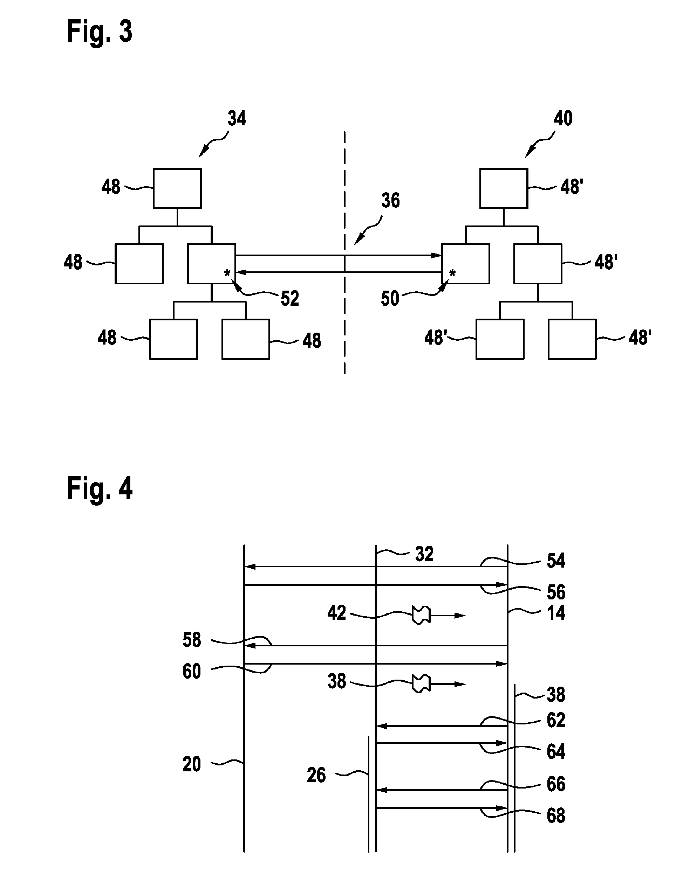

Fig. 3 shows the server side scene graph 34 and the client side scene graph 40. Both scene graphs 34, 40 comprise objects 48, 48', wherein each objects 48, 48' relates to one component 46 of the user interface 28. For example, each object 48, 48' may comprise data fields such as a position of the component in the user interface 28, its width, height, color, etc. Furthermore, depending on the type of the component 46, the object 48, 48' may comprise data fields for the specific type of component 46, such as text content, image content, etc. The scene graph 34 is composed of Java objects 48. The scene graph 40 may be composed of Javascript objects 48' and/or of DOM objects 48'.

Usually, the scene graphs 34, 40 may be structured as trees, i.e. there may be a root object or node representing the user interface 28 and there may be child objects or nodes having one parent object or node. In this case, the spatial relationship of a component 46 of an object 48, 48' may be provided relative to the parent component 46 / parent object 48, 48'.

As described above, the serializing component 32 and the de-serializing component 38 synchronize the two scene graphs 34, 40. When the scene graph 34 changes, the changes are sent from the serializing component 32 via the data stream 36 to the de-serializing component 38, which then updates the scene graph 40.

On the other hand, when user input 50 is detected by the de-serializing component 38, which, for example, may be a mouse click on a component 46 or may be text input to component, this user input 50 is sent back to the application. The data of the user input 50 may be serialized (in this case by the de-serializing component 38) and may be sent via the data stream 46 from the de-serializing component 38 to the serializing component 32, which may apply the user input 50 to the scene graph 34. For example, a user event 52, which was registered within an object 48 of the scene graph 34, may be called with the user input 50.

Fig. 4 shows a diagram indicating a possible interplay of the web browser 14, the serializing component 32 and the web server 20 during a possible start-up sequence of the application 26.

Firstly, the web browser 14 sends a request 54 for the HTML document to the web server 20, which is sent in a response 56 to the web browser 14. The web browser processes the HTML document, finds a tag indicating to load a Javascript file comprising the de-serializing component 38. The web browser 14 then sends a further request 58 for the Javascript file to the web server 20, which sends the Javascript file in a response 60 to the web browser 14.

The web browser 14 starts the de-serializing component 38 (for example by executing a start-up function of the de-serializing component 38), which then establishes a WebSocket connection to the serializing component 32, which is already running in the Java virtual machine 24.

After that, the de-serializing component 38 may send a request 62 to connect to the application 26 via the data stream 36 established by the WebSocket connection.

After that, the serializing component 32 may start an instance of the application 26 in the Java virtual machine 24. Alternatively, the serializing component 32 may register the de-serializing component 38 with an already started application 25. In the latter case, more than one user/web browser may interact with the user interface 28 of the same application 24.

After that, with data packet 64, the serializing component 32 sends the serialized scene graph 34 to the de-serializing component 38, which generates the scene graph 42 as described above and the user interface 28 is displayed in the web browser 14.

After that, a user may interact with the user interface and may generate user data 50. With a data packet 66, the de-serializing component 38 may send the user input 50 to the serializing component 32, which then forwards the user input 50 to the application 26.

For example, in reaction to the user input 50, the application 26 may alter the scene graph 34, the serializing component 32 detects changes and sends the serialized changes to the de-serializing component 38 via data packet 68. In reaction to this, the scene graph 40 and the user interface are updated by the deserializing component 38.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: system
- 12: client
- 14: web browser
- 16: Internet
- 18: server
- 20: web server
- 22: server
- 24: Java virtual machine
- 26: application
- 28: user interface
- 30: GUI framework
- 32: serializing component
- 34: server side scene graph
- 36: data stream
- 38: de-serializing component
- 40: client side scene graph
- 42: HTML page
- 44: display window
- 46: component of user interface
- 48: object of server side scene graph
- 48': object of client side scene graph
- 50: user input
- 52: user event
- 54: request for HTML document
- 56: response with HTML document
- 58: request for de-serializing component
- 60: response with de-serializing component
- 62: request for WebSocket connection
- 64: data packet with scene graph
- 66: data packet with user input
- 68: data packet with changes of scene graph

## Claims

1. A method for displaying a user interface (28) in a web browser (14), the method comprising:
serializing at least a part of a server side scene graph (34) into a data stream (36) with a serializing component (32) running in a Java virtual machine (24), wherein the server side scene graph (34) models a spatial relationship of components (46) of the user interface (28) and wherein the server side scene graph (34) has been generated with an application (26) running in the Java virtual machine (24);
sending the data stream (36) to a web browser (14) via an internet (16) data connection;
receiving the data stream (36) with a Javascript de-serializing component (38) running in the web browser (14);
de-serializing the data stream (36) into a client side scene graph (40) with the de-serializing component (38);
rendering the client side scene graph (40) in the web browser (14).

2. The method of claim 1,
wherein the server side scene graph (34) is created with a Java graphical user interface framework (30); and/or
wherein the application (26) running in the virtual machine (26) interfaces with the framework (30) to create the server side scene graph (34); and/or
wherein the framework (30) is JavaFX.

3. The method of claim 1 or 2,
wherein the server side scene graph (34) and/or the client side scene graph (40) comprises a tree structure with objects (48, 48'), each object (48, 48') representing a component (46) of the user interface (28) and its spatial relationship to a parent component (46).

4. The method of one of the preceding claims,
wherein the data stream (36) is sent from the serializing component (32) to the de-serializing component (38) via a WebSocket protocol.

5. The method of one of the preceding claims,
wherein the de-serializing component (38) generates the client side scene graph (40) with Javascript objects; and/or
wherein the user interface (28) is rendered by the de-serializing component (38) by rendering components (46) of the user interface into an HTML canvas object based on the client side scene graph (40).

6. The method of one of the preceding claims,
wherein the de-serializing component (38) generates the client side scene graph (40) inside a document object model of an HTML scalable vector graphics object.

7. The method of one of the preceding claims,
wherein the serializing component (32) detects changes in the server side scene graph (34) caused by the application (26) and serializes the changes into the data stream (36);
wherein the de-serializing component (38) de-serializes the changes and updates the client side scene graph (40) based on the changes.

8. The method of one of the preceding claims, further comprising:
loading and displaying an HTML document (42) in the web browser (14), the HTML document (42) provided by a web server (20);
loading the de-serializing component (38) in the web browser (14), the deserializing component (38) provided by the web server (20).

9. The method of claim 8,
wherein the de-serializing component (38) is encoded in a Javascript file stored in the web server (20).

10. The method of claim 9,
wherein the Javascript file is referenced in the HTML document (42).

11. The method of one of the preceding claims, further comprising:
detecting user input (50) by the de-serializing component (38);
sending the user input (50) via the internet connection to the serializing component (32).

12. The method of claim 11, further comprising:
applying the user input (50) to the server side scene graph (34) by the serializing component (32) such that a user event (52), registered in the server side scene graph (34) for the user input (50), is executed.

13. A computer program comprising a Java serializing component (32) adapted to be executed by a Java virtual machine (24) and a Javascript de-serializing component (38) adapted to be executed by a web browser (14);
wherein, when being executed in a Java virtual machine (24), the serializing component (38) is adapted for serializing at least a part of a server side scene graph (34) into a data stream (36) and sending the data stream (36) to the de-serializing component (38) via an internet data connection;
wherein, when being executed in the web browser (14), the de-serializing component (38) is adapted for receiving the data stream (36), de-serializing the data stream (36) into a client side scene graph (40) and rendering the client side scene graph (40) in the web browser (14).

14. A computer-readable medium, in which a computer program according to claim 13 is stored.

15. A system (10), comprising:
a Java virtual machine (24), the Java virtual machine (24) containing a Java serializing component (32);
a web server (20), the web server (20) providing a Javascript de-serializing component (38) to be loaded by a web browser (14);
wherein, when being executed in the Java virtual machine (24), the serializing component (32) is adapted for serializing at least a part of a server side scene graph (34) into a data stream (36) and sending the data stream (36) to the de-serializing component (38) via an internet data connection;
wherein, when being executed in the web browser (14), the de-serializing component (38) is adapted for receiving the data stream (36), de-serializing the data stream (36) into a client side scene graph (40) and rendering the client side scene graph (40) in the web browser (14).
